# EUROPEAN PATENT SPECIFICATION

(11) **EP 1 874 012 B1**
(45) Date of publication and mention of the grant of the patent: **23.06.2010**
(21) Application number: 07110766.8
(22) Date of filing: 21.06.2007
(51) Int. Cl.: H04M 1/656, H04N 7/14

(54) **Method and system for recording audio/video data**
Verfahren und System zur Aufzeichnung von Audio-/Videodaten
Procédé et système d'enregistrement de données audio/vidéo

(30) Priority: 30.06.2006 CN 200610091148
(43) Date of publication of application: 02.01.2008
(73) Proprietor: Huawei Technologies Co., Ltd., Longgang District, Shenzhen Guangdong 518129 (CN)
(72) Inventor: Zheng, Pingfang Huawei Technologies Co.,Ltd., Bantian Longgang Dist. Shenzhen Guangdong 518129 (CN)
(74) Representative: Körber, Martin Hans

(56) References cited:
- EP-A- 1 172 990
- WO-A-03/015384
- US-A1- 2003 054 802
- US-A1- 2007 121 811
- US-B1- 6 430 270

## Description

### Field of the Technology

The present invention relates to communication technologies, and more particularly, to a method and a system for recording audio/video data.

### Background of the Invention

With reference to a conventional User Equipment (UE), e.g., a mobile phone, a fixed terminal and a PDA (personal digital assistant). A UE (referred to as a first UE) may record audio/video data from a second UE in the case of unawareness of the recording operation for the user of second UE. It can be seen that an interaction associated with an audio/video recording is not adequate in a communication procedure between the first UE and the second UE, which makes it possible for the first UE to record the audio/video data sent by the second UE such that the second UE does not realize the operation, which may lead to an degradation in communication security. Moreover, the audio/video data sent by the second UE is recorded by the first UE in the case that the second UE does not realize the operation, which makes it possible to invade the privacy of an individual and even lead to various legal disputes. Therefore, the customer reliance in the UE suffers that the privacy of the individual is security compromising.

Patent application EP-A-1172990 (ERICSSON TELEFON AB L M [SE]) provides a method for recording information exchanged between first and second telecommunication devices. A telephone receives a request for authorization of recording from another telephone. The request is a voice message "If you allow the call to be recorded, press '1' or say 'yes'. If not, press '2' or say 'no'". Or, the telephone may also be pre-programmed to allow or refuse recording, for example, the user sets a register REG to YES if he allow any recording, or NO if he does not allow recording of the calls sending a voice or text message back to the requesting telephone. Or, an allowance or a refusal is then automatically sent to the other telephone in the form of YES or NO in dependence on the register REG.

To avoid the above problems, audio/video recording functionality is not provided by some UEs, which decreases the functionality of the device and hurts customer satisfaction. Therefore, a need exists for providing a method and a system for recording audio/video data during communication process.

### Summary of the Invention

One or more embodiments of the present invention provide a method and a system for recording audio/video data.

The technical scheme in accordance with embodiments of the present invention is as follows.

A method for recording audio/video data, including the processes of: receiving by a second UE a recording request from a first UE for recording audio/video data from the second UE during a communication process through a communicating network; determining by the second UE whether the audio/video data is allowed to be recorded by the first UE; and sending an allowance response for informing the first UE the recording is allowed when determining that the audio/video data is allowed to be recorded; and the recording request contains information which distinguishes audio/video category; or the allowance response contains the information which distinguishes audio/video category.

An apparatus for audio/video data to be recorded, the apparatus including: a communication process unit, configured to communicate through a communicating network, and receive a recording request for recording audio/video data from another apparatus; a control processing unit, configured to determine whether the data is allowed to be recorded and generate an allowance response to the recording request for informing that the data is allowed to be recorded when determining that the data is allowed to be recorded, and the communication process unit being further configured to transmit the allowance response in response to the recording request; and the recording request contains information which distinguishes audio/video category; or the allowance response contains the information which distinguishes audio/video category.

A method for recording audio/video data, including the processes of: sending by a first User Equipment (UE) a recording request to a second UE for recording audio/video data from the second UE during a communication process through a communicating network; receiving an allowance response for informing that the audio/video data from the second UE is allowed to be recorded; recording or storing the audio/video data; and the recording request contains information which distinguishes audio/video category; or the allowance response contains the information which distinguishes audio and/or video category.

An apparatus for recording audio/video data in a communication, the apparatus including: a communication process unit, configured to communicate through a communicating network, send a recording request for recording audio/video data to another apparatus in a communication, and receive a response to the recording request from the another apparatus; a control processing unit, configured to determine whether the data is allowed to be recorded according to the response, and perform a recording or saving process when the data is allowed to be recorded; and the recording request contains information which distinguishes audio/video category; or the allowance response contains the information which distinguishes audio/video category.

Comparing with the technical solution in the prior art, the method and system for recording audio/video data provided by embodiments of the present invention both can be achieved as follows: a first UE sends an audio/video recording request to indicate a second UE that audio/video data of the second UE will be recorded, in which the first UE is configured to record the audio/video data of the second UE; the second UE determines whether the audio/video data is allowed to be recorded, and sends an audio/video recording response indicating the audio/video data is allowed to be recorded to the first UE, when the second UE determines that the audio/video data is allowed to be recorded; the first UE records the audio/video data sent by the second UE, when the first UE receives the audio/video recording response.

It can be seen that, the method and system in accordance with embodiments of the present invention may complete the communication procedure, which is associated with the audio/video recording between different UEs. The method and system above may improve the communication security obviously, thereby improving the user satisfaction rate obviously.

### Brief Description of the Drawings

Figure 1 is a flowchart for recording audio/video data in accordance with a preferred embodiment of the present invention.
Figure 2 is a flowchart for recording audio/video data in accordance with another preferred embodiment of the present invention.
Figure 3 is a diagram illustrating a process for recording audio/video data in accordance with Figure 1 and Figure 2.

### Embodiments of the Invention

A detailed description of the present invention will be provided hereinafter with reference to the attached drawings and specific embodiments.

The method and system for recording audio/video data provided by embodiments of the present invention are described as follows. A first UE sends an audio/video recording request to inform a second UE that audio/video data of the second UE will be recorded. The first UE is configured to record the audio/video data of the second UE. The second UE determines whether the audio/video data is allowed to be recorded and sends an audio/video recording response indicating the audio/video data is allowed to be recorded to the first UE when the second UE determines the audio/video data is allowed to be recorded. The first UE records the audio/video data sent by the second UE when the first UE receives the audio/video recording response.

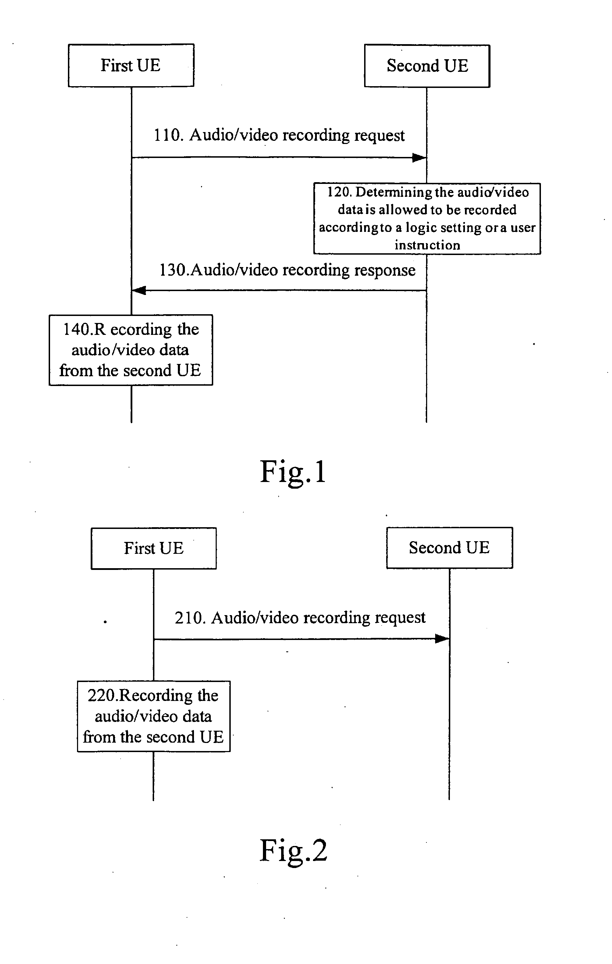

Figure 1 provides a flowchart for recording audio/video data in accordance with a preferred embodiment of the present invention, and the procedure includes the following blocks.

Block 110: a first UE sends an audio/video recording request to a second UE.

Block 120: when receiving the audio/video recording request from the first UE, the second UE determines whether the audio/video data is allowed to be recorded.

There are various methods. Three are described below.

A first determination method includes the second UE reading its preset audio/video recording enable value. The second UE determines whether its audio/video data is allowed to be recorded according to the enable value. For example, if the enable value is 1, the second UE learns that the audio/video data is allowed to be recorded. If the enable value is 0, the second UE learns that its audio/video data is not allowed to be recorded.

A second determination method includes the second UE reading a stored list of identifiers of UEs, which can record the audio/video data and determines whether a UE identifier carried in the received audio/video recording request is included in the read identifier(s). IF the UE identifier carried in the received audio/video recording request is included in the read identifier(s) of UEs, which can record the audio/video data, the second UE determines that audio/video data is allowed to be recorded. Otherwise, the second UE determines that its audio/video data is not allowed to be recorded.

In one embodiment, the identifiers of UEs which can record the audio/video data may be pre-inputted to the second UE by a user. The identifiers of UEs which can record the audio/video data may be multiple preset independent UE identifiers or UE identifiers from a domain range.

In an embodiment, a third determination method provides that when receiving the audio/video recording request, the second UE delivers a recording indication to the user by vibration, audio and/or video to notify the user that the audio/video data of the second UE is requested to be recorded. After obtaining the recording indication, the user presses a confirmation key on the second UE or selects an audio/video recording confirmation option of a communication menu. The second UE determines that its audio/video data is allowed to be recorded when receiving a level value since its confirmation key is pressed or acquiring that the audio/video recording confirmation option is selected.

If the user presses the cancel key on the second UE or selects an audio/video recording cancel option of a communication menu after obtaining the recording indication, the second UE determines that its audio/video data is not allowed to be recorded. When the second UE receives another level value since its cancel key is pressed or recognizes that the audio/video recording cancel option is selected.

In one embodiment, when the determination method is implemented based on the operation logic of the second UE, the second UE may further deliver an indication about contents of the received audio/video recording request in manner of audio and/or video, so as to notify the user that the first UE hopes to record the audio/video data of the second UE.

Block 130: when determining that its audio/video data is allowed to be recorded, the second UE sends to the first UE an audio/video recording response including a confirmation.

The confirmation may be the numerical value 1 or other data formats as long as the first UE is communicated that the second UE allows its audio/video data to be recorded according to the confirmation.

If the second UE determines that its audio/video data is not allowed to be recorded, the second UE will send to the first UE an audio/video recording response including a rejection. Similarly, the rejection may be the numerical value 0 or another data format as long as the first UE learns that the second UE does not allow its audio/video data to be recorded according to the rejection.

In one embodiment, the first UE may further deliver an indication about the contents of the received audio/video recording response in a manner of audio and/or video, to notify the user whether the second UE allows its audio/video data to be recorded.

Block 140: The first UE records the audio/video data from the second UE.

In an embodiment, 110-130 may be performed at any time, e.g., when the first UE communicates with the second UE, before the first UE communicates with the second UE or after a communication between the first UE and the second UE has occurred. It is not necessary for blocks 130 and 140 to be performed successively based on the above. Blocks 130 and 140 are performed successively when the first UE communicates with the second UE and are unnecessary to be performed successively before or after the communication between the first UE and the second UE.

Further, the audio/video recording request may be an audio recording request, a video recording request or both. In one embodiment, a data format may be added to the audio/video recording request, which makes it possible for the second UE to effectively distinguish an audio/video category corresponding to the request For example, in one embodiment, Y is added to the audio/video recording request to indicate that the audio/video recording request hopes to perform an audio recording; S may be added to the audio/video recording request to indicate that the audio/video recording request hopes to perform a video recording; YS may be ad ded to the audio/video recording request to indicate that the audio/video recording request hopes to perform the audio and video recording.

Similarly, the audio/video recording response may be an audio recording response, a video recording response, or both. The data format of the audio/video recording response may correspond to that of the audio/video recording request. For example, in one embodiment, Y1 may be added to the audio recording response to indicate that the audio data is allowed to be recorded; S0 may be added to the video recording response to indicate that the video data is not allowed to be recorded; and Y1S0 may be added to the audio and video recording response to indicate that the audio data is allowed to be recorded while the video data is not allowed to be recorded.

In addition, the audio/video data recorded in block 140 represent the audio data, the video data or both of them, which correspond to the audio/video recording request and the audio/video recording response.

As shown in Figure 1, the process associated with the audio/video recording between the first UE and the second UE makes it possible for the first UE to record the audio/video data sent by the second UE in the case that the second UE allowed to do so. The process can improve the communication security greatly while neither invading an individual's privacy nor leading to other legal disputes. Therefore it improves the user satisfaction greatly.

In an embodiment, the audio/video recording procedure shown in Figure 2 may be performed and includes the following blocks.

Block 210: the first UE sends an audio/video recording request to the second UE. The request notifies the second UE that the first UE will record the audio/video data from the second UE.

In one embodiment, when receiving the audio/video recording request from the first UE, the second UE may further deliver an indication about the contents of the received audio/video recording request in a manner of audio and/or video, to notify the user that the first UE hopes to record the audio/video data from the second UE. The second UE may also send a receipt confirmation message of the audio/video recording request to notify the first UE that the second UE has successfully received the audio/video recording request.

Block 220: The first UE records the audio/video data from the second UE.

The audio/video recording request may be an audio recording request, a video recording request, or both similar to that illustrated in Figure 1. Similarly, the audio/video data recorded in block 220 represent the audio data, the video data or both of them corresponding to the audio/video recording request.

Moreover, in one embodiment, 210 may be performed at any time, e.g., when the first UE communicates with the second UE, before the first UE communicates with the second UE, or after the communication between the first UE and the second UE is committed. It is not necessary to perform blocks 210 and 220 successively. Blocks 210 and 220 are performed successively when the first UE communicates with the second UE and do not need to be performed successively before or after the communication between the first UE and the second UE.

As shown in Figure 2, blocks 110 and 140 may be performed successively in Figure 1 without blocks 120 and 130.

As shown in Figure 2, when the second UE receives the audio/video recording request from the first UE and indicates that the user is using the second UE, the user will determine that the audio/video data of the second UE will be recorded by the first UE, and then the user will focus on the audio/video data which will be recorded by the first UE in the subsequent communication process. This makes it possible to guarantee that the audio/video data associated with the individual privacy is not recorded by the first UE. The interaction associated with the audio/video recording between the first UE and the second UE is complete, which makes it possible for the first UE to record the audio/video data from the second UE in the case that the user using the second UE learns the situation. And the interaction above may greatly improve the communication security while neither invading an individual privacy nor leading to other legal disputes. Thus, it improves the user satisfaction.

To effectively distinguish different UEs, a name such as a first UE and a second UE is used in Figures 1 and 2, which correspondingly distinguishes different UEs in different geographical locations. Two UEs are respectively referred to as the first UE and the second UE.

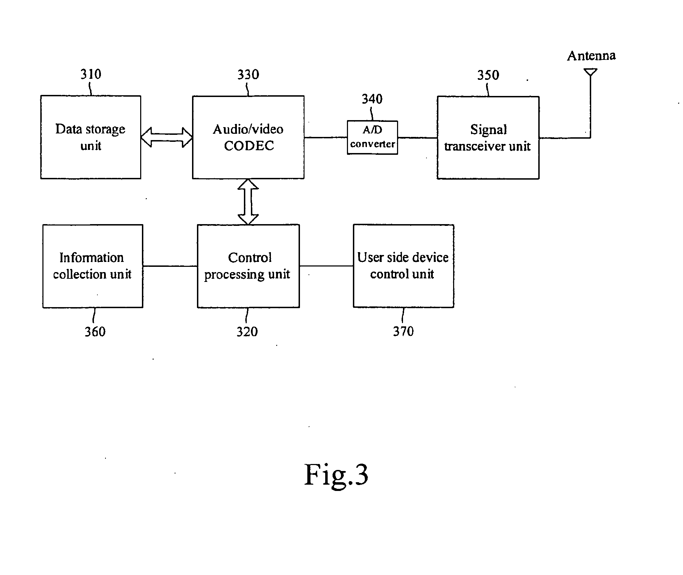

Figure 3 is a diagram illustrating the principle for recording the audio/video data in accordance with an embodiment shown in Figure 1 and Figure 2. In Figure 3, an audio/video CODEC 330 connects with a data storage unit 310, a control processing unit 320 and an Analog-to-Digital (A/D) converter 340 respectively. The A/D converter 340 also connects with a signal transceiver unit 350. The control processing unit 320 further connects with an information collection unit 360 and a user side device control unit 370, respectively. The audio/video CODEC 330, the A/D converter 340, and the signal transceiver unit 350, are all generally referred to as a wireless communication processing unit.

In one embodiment, the signal transceiver unit 350 will receive an audio/video signal from the second UE and send it to the A/D converter 340. After performing an analog-to-digital conversion for the audio/video signal received from the signal transceiver unit 350, the A/D converter 340 sends the converted audio/video signal to the audio/video CODEC 330. After decoding the converted audio/video signal from the A/D converter 340, the audio/video CODEC 330 may send the decoded audio/video signal to the data storage unit 310. The data storage unit 310 saves the received audio/video data.

In the above audio/video data recording procedure, the control processing unit 320, is configured for controlling the audio/video CODEC 330 to successfully decode the audio/video data using a correct decoding format, for example, the control processing unit 320 notifies the audio/video CODEC 330 of the decoding format, and then the audio/video CODEC 330 decodes the received audio/video data using the decoding format sent by the control processing unit 320.

In one embodiment, the signal transceiver unit 350 may be connected with the data storage unit 310 directly, which makes it possible for the signal transceiver unit 350 to send the audio/ video data directly to the data storage unit 310. It is not necessary to perform the analog-to-digital conversion and the decoding process. The data storage unit 310 saves the received audio/video data. The analog-to-digital conversion and the decoding process are performed for these audio/video data, when it is necessary to use the saved audio/video data. For example, it is necessary to play the saved audio/video data in the subsequent operations.

In one embodiment, the user side device control unit 370 may receive an audio/video recording signal from a user via its connected display, keyboard, etc., and send the received audio/video recording signal to the control processing unit 320. The audio/video recording signal above indicates that the user hopes to record the audio/video data of the second UE. After receiving the audio/video recording signal, the control processing unit 320 sends an audio/video recording request via a wireless communication processing unit, and directly controls the wireless communication processing unit to send the audio/video data from the second UE to the data storage unit 310 for saving. Alternatively, when receiving the audio/video recording response from the second UE via the wireless communication processing unit, the control processing unit 320 controls the wireless communication processing unit to send the audio/video data from the second UE to the data storage unit 310 for saving.

In one embodiment, when receiving the audio/video recording response from the second UE via the wireless communication processing unit, the control processing unit 320 may further determine whether the audio/video data is allowed to be recorded, for example: the control processing unit 320 reads an audio/video recording enable value stored in the data storage unit 310. If the audio/video recording enable value is 1, the control processing unit 320 determines that the audio/video data is allowed to be recorded. Otherwise, the control processing unit 320 determines that the audio/video data is not allowed to be recorded. The control processing unit 320 may further read identifiers of UEs which can record the audio/video data stored in the data storage unit 310 and determine whether the UE identifier carried in the received audio/video recording request is included in the read list of identifiers of UEs which can record the audio/video data. If the UE identifier carried in the received audio/video recording request is included in the read identifiers of UEs, the control processing unit 320 determines that the audio/video data is allowed to be recorded. Otherwise, the control processing unit 320 determines that the audio/video data is not allowed to be recorded.

The audio/video recording enable value and the identifiers of UEs which can record the audio/video data may also be stored in a storage unit, such as a buffer unit of the control processing unit 320. The control processing unit 320 may directly read them from the storage unit when needing these contents.

Furthermore, when receiving the audio/video recording request, the control processing unit 320 may also send a recording indication signal to the user side device control unit 370. When receiving the recording indication signal, the user side device control unit 370 controls its connected user side devices, such as a vibration generator, a speaker and a display, etc, to respectively deliver recording indications in manner of vibration, audio and video. When receiving a level value because that a confirmation key on a keyboard is pressed or acquiring that an audio/video recording confirmation option shown by the display is selected, the user side device control unit 370 sends the received level value or the audio/video recording confirmation to the control processing unit 320. The control processing unit 320 determines that the audio/video data is allowed to be recorded when receiving the level value or the audio/video recording confirmation.

When determining the audio/video data is allowed to be recorded, the control processing unit 320 sends, via the wireless communication processing unit, an audio/video recording response carrying a confirmation to guarantee that the UE receiving the response is able to record the audio/video data from the first UE. The audio/video data from the first UE is collected by the information collection unit 360 including an audio collector and/or a video collector. The control processing unit 320 will obtain the collected audio/video data from the information collection unit 360, and outputs the obtained audio/video data via the wireless communication processing unit.

In one embodiment, the control processing unit 320 is generally implemented by a Central Processing Unit (CPU).

In one embodiment, the component for converting analog signals into digital signals or converting digital signals into analog signals shown in Figure 3 is the A/D converter 340. In practical applications, a digital-to-analog converter for converting digital signals into analog signals is connected between the audio/video CODEC 330 and the signal transceiver unit 350 which are both included in the wireless communication processing unit. When sending out signals, the signals to be sent out will be processed with a digital-to-analog conversion by the digital-to-analog converter of the wireless communication processing unit, instead of passing the A/D converter 340 of the wireless communication processing unit when receiving signals.

As can be seen from the above descriptions, the method and the system for recording audio/video data, which are provided by embodiments of the present invention, may complete a communication procedure associated with an audio/video recording between different UEs. The method and system may greatly improve the communication security, thereby improving the user satisfaction greatly.

## Claims

1. A method for recording audio/video data, comprising:
receiving, by a second User Equipment, UE, a recording request from a first UE for recording audio or video data or both of them from the second UE during a communication process through a communicating network;
determining, by the second UE, whether the audio/video data is allowed to be recorded by the first UE; and
sending an allowance response for informing the first UE that the recording is allowed when determining that the audio/video data is allowed to be recorded,
wherein:
the recording request contains information which distinguishes audio/video category; and
the allowance response contains the information which distinguishes audio/video category.

2. The method of Claim 1, further comprising:
sending, by the second UE, a receipt confirmation message to confirm safe receipt of the recording request from the first UE.

3. The method of Claim 1, wherein the determining whether the audio/video data is allowed to be recorded further comprises:
reading audio/video recording enable value preset in the second UE;
determining whether the audio/video data is allowed to be recorded according to the audio/video recording enable value, and when the enable value is corresponding to an allowance for the recording, determining that the audio/video is allowed to be recorded.

4. The method of Claim 1, wherein the determining whether the audio/video data is allowed to be recorded comprises:
reading a stored list of identifiers of UEs capable of recording the audio/video,
determining whether a UE identifier carried in the recording request is included in the list of identifiers of UEs, determining that the audio/video data is allowed to be recorded, if the UE identifier carried in the recording request is included in the list of identifiers of UEs.

5. The method of Claim 4, wherein the list of identifiers of UEs comprises:
multiple preset independent UE identifiers or UE identifiers from a domain range.

6. The method of Claim 1, wherein the determining whether the audio/video data is allowed to be recorded comprises:
determining that the audio/video data is allowed to be recorded, when the second UE receives a level value as a result of a confirmation key being pressed or when the second UE learns that an audio/video recording confirmation option is selected;

7. The method of Claim 6, wherein the determining whether the audio/video data is allowed to be recorded comprises:
determining that the audio/video data is not allowed to be recorded, when the second UE receives another level value as a result of a cancel key being pressed or acquires that an audio/video recording cancel option is selected.

8. The method of Claim 1, further comprising:
delivering, by the second UE, an indication for informing the user of the second UE about contents of the recording request in a manner of audio and/or video.

9. The method of claim 1, wherein the information which distinguishes audio/video category is data format.

10. An apparatus for recording audio/video data during a communication process, the apparatus comprising:
a communication process unit, configured to communicate through a communicating network, and receive a recording request for recording from another apparatus, audio or video data or both of them
a control processing unit, configured to determine whether the data is allowed to be recorded and generate an allowance response to the recording request for informing that the data is allowed to be recorded when determining that the data is allowed to be recorded, and
the communication process unit being further configured to transmit the allowance response in response to the recording request, wherein:
the recording request contains information which distinguishes audio/video category; and
the allowance response contains the information which distinguishes audio/video category.

11. The apparatus of claim 10, further comprising:
a data storage unit, configured to store audio/video recording enable value indicating whether the data is allowed to be recorded,
wherein the control process unit reads the enable value and determines whether the data is allowed to be recorded according to the enable value.

12. The apparatus of claim 10, further comprising:
a data storage unit, configured to store a list of identifiers of UEs which are allowed to record the data,
wherein the control process unit reads the list and determines whether an identifier carried in the recording request is included in the list, so as to determine whether the data is allowed to be recorded.

13. The apparatus according to claim 10, further comprising:
a user side control unit, for prompting the user of the apparatus by vibration, voice/video to confirm whether to allow the data to be recorded, in response to the recording request received by the control processing unit, and receiving level value as a result of a confirm key being press and sending the level value to the control process unit,
wherein the control process unit learns that the data is allowed to be recorded according to the level value.

14. The apparatus according to claim 10, further comprising:
an information collection unit, configured to collect the audio/video data requested by the recording request,
wherein the control process unit obtains data from the information collection unit and sends out the data via the communication process unit.

15. The apparatus according to claim 10, wherein the communication process unit further comprises:
a signal transceiver unit, for transmitting and receiving a signal,
an audio and video CODEC, for coding and decoding the signal,
an Analog/Digital converter, for performing converting process between analog and digital signals.

16. A method for recording audio/video data, comprising:
sending, by a first User Equipment, UE, a recording request to a second UE for recording audio or video data or both of them from the second UE during a communication process through a communicating network;
receiving an allowance response for informing that the audio/video data from the second UE is allowed to be recorded;
recording or storing the audio/video data, wherein:
the recording request contains information which distinguishes audio/video category; and
the allowance response contains the information which distinguishes audio/video category.

17. The method of claim 16, further comprising:
delivering an indication about the allowance response to the user of the first UE in manner of audio and/or video.

18. The method of Claim 16, wherein the process of recording the audio/video data comprises:
receiving and saving, by the first UE, the audio/video data sent by the second UE.

19. The method of Claim 16, wherein the process of recording the audio/video data comprises:
receiving, by the first UE, the audio/video data sent by the second UE,
performing an analog-digital conversion and a decoding process for the received audio/video data,
saving, by the first UE, the processed audio/video data.

20. The method of Claim 16, further comprising:
sending audio/video recording information to inform the second UE that the audio/video data of the second UE will be recorded.

21. An apparatus for recording audio/video data during a communication process, the apparatus comprising:
a communication process unit, configured to communicate through a communicating network, send a recording request for recording audio or video data or both of them to another apparatus, and receive an allowance response to the recording request from the another apparatus,
a control processing unit, configured to determine whether the data is allowed to be recorded according to the allowance response, and perform a recording or saving process when the data is allowed to be recorded, wherein:
the recording request contains information which distinguishes audio/video category; and
the allowance response contains the information which distinguishes audio/video category.

## Patentansprüche

1. Verfahren zum Aufzeichnen von Audio/Video-Daten, mit den folgenden Schritten:
Empfangen einer Aufzeichnungsanforderung durch ein zweites Benutzergerät UE von einem ersten UE zum Aufzeichnen von Audio- oder Videodaten oder beiden von dem zweiten UE während eines Kommunikationsprozesses durch ein kommunizierendes Netzwerk;
Bestimmen, ob die Audio/Video-Daten durch das erste UE aufgezeichnet werden dürfen, durch das zweite UE; und
Senden einer Erlaubnisantwort zum Informieren des ersten UE, dass das Aufzeichnen erlaubt ist, wenn bestimmt wird, dass die Audio/Video-Daten aufgezeichnet werden dürfen, wobei
die Aufzeichnungsanforderung Informationen enthält, die Audio/Video-Kategorie unterscheiden; und
die Erlaubnisantwort die Informationen enthält, die Audio/Video-Kategorie unterscheiden.

2. Verfahren nach Anspruch 1, ferner mit dem folgenden Schritt:
Senden einer Empfangsbestätigungsnachricht durch das zweite UE, um den sicheren Empfang der Aufzeichnungsanforderung von dem ersten UE zu bestätigen.

3. Verfahren nach Anspruch 1, wobei das Bestimmen, ob die Audio/Video-Daten aufgezeichnet werden dürfen, ferner Folgendes umfasst:
Lesen eines in dem zweiten UE voreingestellten Audio/Video-Aufzeichnungsfreigabewerts;
Bestimmen, ob die Audio/Video-Daten aufgezeichnet werden dürfen, gemäß dem Audio/Video-Aufzeichnungsfreigabewert, und wenn der Freigabewert einer Erlaubnis für das Aufzeichnen entspricht, Bestimmen, dass das Audio/Video aufgezeichnet werden darf.

4. Verfahren nach Anspruch 1, wobei das Bestimmen, ob die Audio/Video-Daten aufgezeichnet werden dürfen, Folgendes umfasst:
Lesen einer gespeicherten Liste von Kennungen von zum Aufzeichnen des Audio/Video fähigen UE,
Bestimmen, ob eine in der Aufzeichnungsanforderung geführte UE-Kennung in der Liste von Kennungen von UE enthalten ist, Bestimmen, dass die Audio/Video-Daten aufgezeichnet werden dürfen, wenn die in der Aufzeichnungsanforderung geführte UE-Kennung in der Liste von Kennungen von UE enthalten ist.

5. Verfahren nach Anspruch 4, wobei die Liste von Kennungen von UE Folgendes umfasst:
mehrere voreingestellte unabhängige UE-Kennungen oder UE-Kennungen aus einem Domänenbereich.

6. Verfahren nach Anspruch 1, wobei das Bestimmen, ob die Audio/Video-Daten aufgezeichnet werden dürfen, Folgendes umfasst:
Bestimmen, dass die Audio/Video-Daten aufgezeichnet werden dürfen, wenn das zweite UE als Ergebnis der Betätigung einer Bestätigungstaste einen Level-Wert empfängt oder wenn das zweite UE erfährt, dass eine Audio/Video-Aufzeichnungsbestätigungsoption ausgewählt ist.

7. Verfahren nach Anspruch 6, wobei das Bestimmen, ob die Audio/Video-Daten aufgezeichnet werden dürfen, Folgendes umfasst:
Bestimmen, dass die Audio/Video-Daten nicht aufgezeichnet werden dürfen, wenn das zweite UE als Ergebnis der Betätigung einer Abbruchtaste einen anderen Level-Wert empfängt oder erfasst, dass eine Audio/Video-Aufzeichnungsabbruchoption ausgewählt ist.

8. Verfahren nach Anspruch 1, ferner mit dem folgenden Schritt:
Abliefern einer Indikation durch das zweite UE zum Informieren des Benutzers des zweiten UE über Inhalte der Aufzeichnungsanforderung auf eine Weise von Audio und/oder Video.

9. Verfahren nach Anspruch 1, wobei die Informationen, die Audio/Video-Kategorie unterscheiden, Datenformat sind.

10. Vorrichtung zum Aufzeichnen von Audio/Video-Daten während eines Kommunikationsprozesses, wobei die Vorrichtung Folgendes umfasst:
eine Kommunikationsprozesseinheit, die dafür ausgelegt ist, durch ein kommunizierendes Netzwerk zu kommunizieren und eine Aufzeichnungsanforderung zum Aufzeichnen von Audio- oder Videodaten oder beiden von einer anderen Vorrichtung zu empfangen,
eine Steuerverarbeitungseinheit, die dafür ausgelegt ist, zu bestimmen, ob die Daten aufgezeichnet werden dürfen, und eine Erlaubnisantwort auf die Aufzeichnungsanforderung zu erzeugen, um zu informieren, dass die Daten aufgezeichnet werden dürfen, wenn bestimmt wird, dass die Daten aufgezeichnet werden dürfen, und
wobei die Kommunikationsprozesseinheit ferner dafür ausgelegt ist, als Reaktion auf die Aufzeichnungsanforderung die Erlaubnisantwort zu senden, wobei
die Aufzeichnungsanforderung Informationen enthält, die Audio/Video-Kategorie unterscheiden; und
die Erlaubnisantwort die Informationen enthält, die Audio/Video-Kategorie unterscheiden.

11. Vorrichtung nach Anspruch 10, ferner umfassend:
eine Datenspeichereinheit, die dafür ausgelegt ist, einen Audio/Video-Aufzeichnungsfreigabewert zu speichern, der angibt, ob die Daten aufgezeichnet werden dürfen,
wobei die Steuerprozesseinheit den Freigabewert liest und gemäß dem Freigabewert bestimmt, ob die Daten aufgezeichnet werden dürfen.

12. Vorrichtung nach Anspruch 10, ferner umfassend:
eine Datenspeichereinheit, die dafür ausgelegt ist, eine Liste von Kennungen von UE zu speichern, die die Daten aufzeichnen dürfen,
wobei die Steuerprozesseinheit die Liste liest und bestimmt, ob eine in der Aufzeichnungsanforderung geführte Kennung in der Liste enthalten ist, um so zu bestimmen, ob die Daten aufgezeichnet werden dürfen.

13. Vorrichtung nach Anspruch 10, ferner umfassend:
eine Benutzerseiten-Steuereinheit zum Auffordern des Benutzers der Vorrichtung durch Vibration, Sprache/Video, zu bestätigen, ob das Aufzeichnen der Daten erlaubt werden soll, als Reaktion auf die durch die Steuerverarbeitungseinheit empfangene Aufzeichnungsanforderung und zum Empfangen eines Level-Werts als Ergebnis der Betätigung einer Bestätigungstaste und zum Senden des Level-Werts zu der Steuerprozesseinheit,
wobei die Steuerprozesseinheit gemäß dem Level-Wert erfährt, dass die Daten aufgezeichnet werden dürfen.

14. Vorrichtung nach Anspruch 10, ferner umfassend:
eine Informationssammeleinheit, die dafür ausgelegt ist, die durch die Aufzeichnungsanforderung angeforderten Audio/Video-Daten zu sammeln,
wobei die Steuerprozesseinheit Daten von der Informationssammeleinheit erhält und die Daten über die Kommunikationsprozesseinheit heraussendet.

15. Vorrichtung nach Anspruch 10, wobei die Kommunikationsprozesseinheit ferner Folgendes umfasst:
eine Signalsender-/-empfängereinheit zum Senden und Empfangen eines Signals,
einen Audio- und Video-CODEC zum Codieren und Decodieren des Signals,
einen Analog-Digital-Umsetzer zum Durchführen eines Umsetzungsprozesses zwischen Analog- und Digitalsignalen.

16. Verfahren zum Aufzeichnen von Audio/Video-Daten, mit den folgenden Schritten:
Senden einer Aufzeichnungsanforderung durch ein erstes Benutzergerät UE zu einem zweiten UE zum Aufzeichnen von Audio- oder Videodaten oder beiden von dem zweiten UE während eines Kommunikationsprozesses durch ein kommunizierendes Netzwerk;
Empfangen einer Erlaubnisantwort zum Informieren, dass die Audio/Video-Daten von dem zweiten UE aufgezeichnet werden dürfen;
Aufzeichnen oder Speichern der Audio/Video-Daten, wobei
die Aufzeichnungsanforderung Informationen enthält, die Audio/Video-Kategorie unterscheiden; und
die Erlaubnisantwort die Informationen enthält, die Audio/Video-Kategorie unterscheiden.

17. Verfahren nach Anspruch 16, ferner mit dem folgenden Schritt:
Abliefern einer Indikation über die Erlaubnisantwort an den Benutzer des ersten UE auf Audio- und/oder Video-Weise.

18. Verfahren nach Anspruch 16, wobei der Prozess des Aufzeichnens der Audio/VideoDaten Folgendes umfasst:
Empfangen und Abspeichern der durch das zweite UE gesendeten Audio/VideoDaten durch das erste UE.

19. Verfahren nach Anspruch 16, wobei der Prozess des Aufzeichnens der Audio/VideoDaten Folgendes umfasst:
Empfangen der durch das zweite UE gesendeten Audio/Video-Daten durch das erste UE,
Durchführen einer Analog-Digital-Umsetzung und eines Decodierungsprozesses für die empfangenen Audio/Video-Daten,
Abspeichern der verarbeiteten Audio/Video-Daten durch das erste UE.

20. Verfahren nach Anspruch 16, ferner mit dem folgenden Schritt:
Senden von Audio/Video-Aufzeichnungsinformationen, um das zweite UE zu informieren, dass die Audio/Video-Daten des zweiten UE aufgezeichnet werden.

21. Vorrichtung zum Aufzeichnen von Audio/Video-Daten während eines Kommunikationsprozesses, wobei die Vorrichtung Folgendes umfasst:
eine Kommunikationsprozesseinheit, die dafür ausgelegt ist, durch ein kommunizierendes Netzwerk zu kommunizieren, eine Aufzeichnungsanforderung zum Aufzeichnen von Audio- oder Videodaten oder beiden zu einer anderen Vorrichtung zu senden und eine Erlaubnisantwort auf die Aufzeichnungsanforderung von der anderen Vorrichtung zu empfangen,
eine Steuerverarbeitungseinheit, die dafür ausgelegt ist, gemäß der Erlaubnisantwort zu bestimmen, ob die Daten aufgezeichnet werden dürfen, und einen Aufzeichnungs- oder Abspeicherprozess durchzuführen, wenn die Daten aufgezeichnet werden dürfen, wobei
die Aufzeichnungsanforderung Informationen enthält, die Audio/Video-Kategorie unterscheiden; und
die Erlaubnisantwort die Informationen enthält, die Audio/Video-Kategorie unterscheiden.

## Revendications

1. Procédé d'enregistrement de données audio/vidéo, comprenant :
la réception, par un second Equipement Utilisateur (UE), d'une requête d'enregistrement depuis un premier UE pour enregistrer des données audio ou vidéo ou les deux depuis le second UE durant un processus de communication par le biais d'un réseau de communication ;
la détermination, par le second UE, si l'enregistrement des données audio/vidéo par le premier UE est autorisé ou non ; et
l'envoi d'une réponse d'autorisation pour informer le premier UE que l'enregistrement est autorisé quand il est déterminé que l'enregistrement des données audio/vidéo est autorisé, dans lequel :
la requête d'enregistrement contient des informations qui différencient la catégorie audio/vidéo ; et
la réponse d'autorisation contient les informations qui différencient la catégorie audio/vidéo.

2. Procédé selon la revendication 1, comprenant en outre :
l'envoi, par le second UE, d'un message de confirmation de réception pour confirmer la bonne réception de la requête d'enregistrement du premier UE.

3. Procédé selon la revendication 1, dans lequel la détermination si l'enregistrement des données audio/vidéo est ou non autorisé comprend en outre :
la lecture d'une valeur de validation d'enregistrement audio/vidéo préréglée dans le second UE ;
la détermination si l'enregistrement des données audio/vidéo est autorisé ou non en fonction de la valeur de validation d'enregistrement audio/vidéo et quand la valeur de validation correspond à une autorisation d'enregistrement, la détermination que l'enregistrement audio/vidéo est autorisé.

4. Procédé selon la revendication 1, dans lequel la détermination si l'enregistrement des données audio/vidéo est autorisé ou non comprend :
la lecture d'une liste mémorisée d'identifiants d'UE capables d'enregistrer les données audio/vidéo ;
la détermination si un identifiant d'UE porté dans la requête d'enregistrement est inclus ou non dans la liste d'identifiants d'UE, déterminant que l'enregistrement des données audio/vidéo est autorisé, si l'identifiant d'UE porté dans la requête d'enregistrement est inclus dans la liste d'identifiants d'UE.

5. Procédé selon la revendication 4, dans lequel la liste d'identifiants d'UE comprend :
de multiples identifiants d'UE indépendants préréglés ou des identifiants d'UE d'une plage de domaine.

6. Procédé selon la revendication 1, dans lequel la détermination si l'enregistrement des données audio/vidéo est autorisé ou non comprend:
la détermination que l'enregistrement des données audio/vidéo est autorisé, quand le second UE reçoit une valeur de niveau suite à la pression d'une touche de confirmation ou quand le second UE apprend qu'une option de confirmation d'enregistrement audio/vidéo est sélectionnée.

7. Procédé selon la revendication 6, dans lequel la détermination si l'enregistrement des données audio/vidéo est autorisé ou non comprend:
la détermination que l'enregistrement des données audio/vidéo n'est pas autorisé, quand le second UE reçoit une autre valeur de niveau suite à la pression d'une touche d'annulation ou apprend qu'une option d'annulation d'enregistrement audio/vidéo est sélectionnée.

8. Procédé selon la revendication 1, comprenant en outre :
la délivrance, par le second UE, d'une indication informant l'utilisateur du second UE du contenu de la requête d'enregistrement sous forme audio et/ou vidéo.

9. Procédé selon la revendication 1, dans lequel les informations qui différencient la catégorie audio/vidéo est le format de données.

10. Appareil d'enregistrement de données audio/vidéo durant un processus de communication, comprenant :
une unité de processus de communication, configurée pour communiquer par le biais d'un réseau de communication, et recevoir une requête d'enregistrement pour enregistrer des données audio ou vidéo ou les deux depuis un autre appareil ;
une unité de processus de commande, configurée pour déterminer si l'enregistrement des données est autorisé ou non et générer une réponse d'autorisation à la requête d'enregistrement pour informer que l'enregistrement des données est autorisé quand il est déterminé que l'enregistrement des données est autorisé, et
l'unité de processus de communication étant en outre configurée pour transmettre la réponse d'autorisation en réponse à la requête d'enregistrement, où :
la requête d'enregistrement contient des informations qui différencient la catégorie audio/vidéo ; et
la réponse d'autorisation contient les informations qui différencient la catégorie audio/vidéo.

11. Appareil selon la revendication 10, comprenant en outre :
une unité de mémorisation de données, configurée pour mémoriser une valeur de validation d'enregistrement audio/vidéo indiquant si l'enregistrement des données est autorisé ou non,
dans lequel l'unité de processus de commande lit la valeur de validation et détermine si l'enregistrement des données est autorisé ou non en fonction de la valeur d'activation.

12. Appareil selon la revendication 10, comprenant en outre :
une unité de mémorisation de données, configurée pour mémoriser une liste d'identifiants d'UE qui sont autorisés à enregistrer les données,
dans lequel l'unité de processus de commande lit la liste et détermine si un identifiant porté dans la requête d'enregistrement est inclus ou non dans la liste, de façon à déterminer si l'enregistrement des données est autorisé ou non.

13. Appareil selon la revendication 10, comprenant en outre :
une unité de commande côté utilisateur, pour avertir l'utilisateur de l'appareil par vibration, voix/vidéo afin de confirmer s'il convient ou non d'autoriser l'enregistrement des données, en réponse à la requête d'enregistrement reçue par l'unité de processus de commande, et recevoir une valeur de niveau suite à la pression d'une touche de confirmation et envoyer la valeur de niveau à l'unité de processus de commande,
dans lequel l'unité de processus de commande apprend que l'enregistrement des données est autorisé en fonction de la valeur de niveau.

14. Appareil selon la revendication 10, comprenant en outre :
une unité de collecte d'informations, configurée pour collecter les données audio/vidéo demandées par la requête d'enregistrement,
dans lequel l'unité de processus de commande obtient les données de l'unité de collecte d'informations et envoie les données par l'intermédiaire de l'unité de processus de communication.

15. Appareil selon la revendication 10, dans lequel l'unité de processus de communication comprend en outre :
une unité d'émetteur-récepteur de signaux, destinée à émettre et recevoir un signal, un CODEC audio et vidéo, destiné à coder et décoder le signal,
un convertisseur analogique/numérique, destiné à effectuer un processus de conversion entre des signaux analogiques et numériques.

16. Procédé d'enregistrement de données audio/vidéo, comprenant :
l'envoi, par un premier Equipement Utilisateur UE, d'une requête d'enregistrement à un second UE pour enregistrer des données audio ou vidéo ou les deux depuis le second UE durant un processus de communication par le biais d'un réseau de communication ;
la réception d'une réponse d'autorisation pour informer que l'enregistrement des données audio/vidéo du second UE est autorisé :
l'enregistrement ou la mémorisation des données audio/vidéo, dans lequel :
la requête d'enregistrement contient des informations qui différencient la catégorie audio/vidéo ; et
la réponse d'autorisation contient les informations qui différencient la catégorie audio/vidéo.

17. Procédé selon la revendication 16, comprenant en outre :
la délivrance d'une indication concernant la réponse d'autorisation à l'utilisateur du premier UE sous forme audio et/ou vidéo.

18. Procédé selon la revendication 16, dans lequel le processus d'enregistrement des données audio/vidéo comprend :
la réception et la sauvegarde, par le premier UE, des données audio/vidéo envoyées par le second UE.

19. Procédé selon la revendication 16, dans lequel le processus d'enregistrement des données audio/vidéo comprend :
la réception, par le premier UE, des données audio/vidéo envoyées par le second UE ; l'exécution d'une conversion analogique-numérique et d'un processus de décodage des données audio/vidéo reçues ;
la sauvegarde, par le premier UE, des données audio/vidéo traitées.

20. Procédé selon la revendication 16, comprenant en outre :
l'envoi d'informations d'enregistrement audio/vidéo pour informer le second UE que les données audio/vidéo du second UE vont être enregistrées.

21. Appareil d'enregistrement de données audio/vidéo durant un processus de communication, comprenant :
une unité de processus de communication, configurée pour communiquer par le biais d'un réseau de communication, envoyer une requête d'enregistrement pour enregistrer des données audio ou vidéo ou les deux vers un autre appareil et recevoir une réponse d'autorisation à la requête d'enregistrement depuis l'autre appareil ;
une unité de processus de commande, configurée pour déterminer si l'enregistrement des données est autorisé ou non en fonction de la réponse d'autorisation, et effectuer un processus d'enregistrement ou de sauvegarde quand l'enregistrement des données est autorisé, dans lequel :
la requête d'enregistrement contient des informations qui différencient la catégorie audio/vidéo ; et
la réponse d'autorisation contient les informations qui différencient la catégorie audio/vidéo.
